# EUROPÄISCHE PATENTSCHRIFT

(11) **EP 1 927 790 B1**
(45) Veröffentlichungstag und Bekanntmachung des Hinweises auf die Patenterteilung: **29.08.2012**
(21) Anmeldenummer: 07022654.3
(22) Anmeldetag: 22.11.2007
(51) Int. Cl.: B62M 9/10, F16H 55/30

(54) **Kettenzahnrad**
Sprocket wheel
Roue dentée à chaîne

(30) Priorität: 01.12.2006 DE 102006057168
(43) Veröffentlichungstag der Anmeldung: 04.06.2008
(73) Patentinhaber: SRAM Deutschland GmbH, 97404 Schweinfurt (DE)
(72) Erfinder: Braedt, Henrik, Dipl.-Ing., 97076 Würzburg (DE)

(56) Entgegenhaltungen:
- EP-A2- 0 934 871
- EP-A2- 1 167 174
- DE-A1- 4 004 757
- DE-C- 311 406
- DE-C- 351 503
- US-A- 740 445
- US-A- 5 980 407

## Beschreibung

Die Erfindung betrifft ein Kettenzahnrad zur Übertragung einer Kettenumfangskraft, kurz Kraft bezeichnet, von einer Kette auf ein Antriebsteil oder umgekehrt, wobei die Kette in Zähne einer außen am Kettenzahnrad angeordneten Verzahnung eingreift und das Kettenzahnrad mit einem Antriebsteil zur Übertragung eines Drehmomentes drehfest verbunden ist und wobei das Kettenzahnrad Durchbrüche innerhalb der Verzahnung aufweist.

Mit dem US-Patent 5,980,407 vom 9. November 1999 ist eine Form eines Rotationskörpers bekannt geworden, der entweder als Bremsscheibe oder als Kettenzahnrad einsetzbar ist und Gewichtsreduktionslöcher aufweist, die zwischen einem äußeren Ringabschnitt und einem inneren Ringabschnitt angeordnet sind und in einer Antriebsdrehrichtung von innen nach außen vorlaufend ausgebildet sind, wobei sich Armabschnitte bilden, die im Vergleich zu einer undurchbrochenen Scheibe bei einer Belastung durch eine Kette eine elastische Verdrehung des äußeren Ringabschnitts gegenüber dem inneren Ringabschnitt in der Antriebsdrehrichtung zulässt. Die Durchbrüche sind ferner in einer zur Gewichtsreduktion geeigneten Form angeordnet, die jedoch auf die Anzahl der Zähne der Verzahnung keinen Bezug hat.

Ferner ist ein Kassettenzahnkranz der Firma Shimano mit der Typbezeichnung CS-7800 bekannt, der aus mehreren Kettenzahnrädern besteht, von denen einige kreisrunde Durchbrüche aufweisen, die jeweils unter einem Zahn angeordnet sind.

Diese Durchbrüche sind symmetrisch zur jeweiligen Zahnmittellinie angeordnet und dienen in ihrer Dimensionierung ausschließlich der Gewichtsreduktion.

Das Dokument EP 1 167 174 A2 offenbart alle Merkmale aus dem Oberbegriff von Anspruch 1.

Die Kettenzahnräder gemäß den vorliegenden Erfindungen und gemäß dem Stand der Technik im Allgemeinen weisen Durchbrüche unter den Zähnen auf, die der Gewichtseinsparung dienen. Sind die Durchbrüche symmetrisch zur Zahnmittellinie angeordnet, so entspricht dies einer Stützstruktur, die auf hohe Steifigkeit ausgelegt ist. Je nach den Anforderungen an diese Stützstruktur können die Größe und die Ausgestaltung der Stege zwischen den Durchbrüchen derart variiert werden, dass sich in der Antriebsdrehrichtung eine gewisse Elastizität ergibt, die bei hohen Krafteinleitungen zu einer elastischen Verformung führt, die im Wesentlichen aus einer Verschiebung des Verzahnungsbereiches radial außerhalb der Durchbrüche gegenüber dem Bereich radial innerhalb der Durchbrüche mit dem Anschluss an ein Antriebsteil besteht. Eine funktionale Elastizität der einzelnen Zähne zueinander ist dabei nicht oder nur unwesentlich gegeben.

Bei Kettenzahnrädern der bisherigen Art trägt der erste lastseitig im Eingriff befindliche Zahn einen erheblichen Teil der gesamten Antriebslast, nämlich bis zu 95 % je nach Abhängigkeit von der Zähnezahl, dem Flankenwinkel, der Teilung und weiteren Parametern. Dies führt zu sehr hohen Flächenpressungen zwischen der Lastflanke und der Rolle der Kette und zu Verschleiß, wenn die Rolle in diese ein- bzw. ausläuft.

Jeder Zahn ist im Fahrbetrieb des Fahrrades unterschiedlich hohen Biegebelastungen ausgesetzt, deren Größe in erster Linie abhängig von der Benutzung des Fahrrades ist. So treten die höchsten Belastungen an den Kettenzahnrädern von Rennrädern und Mountainbikes gerade dort auf, wo der Bauraum durch eine Vielzahl nebeneinander angeordneter Kettenzahnräder äußerst eingeschränkt ist. Dies führt dazu, dass sich bei den Zähnen dieser sehr schmal ausgelegten Kettenzahnräder Risse bilden, die sich fortpflanzen und zum Bruch des jeweiligen Zahnes führen können. Dieser Umstand verschärft sich noch durch seitliche Anprägungen an den Zähnen, die als Schalthilfen beim Gangwechsel dienen, wodurch die Blechstärke des Kettenzahnrades weiter verringert wird. Schließlich ist noch ein weiterer Anwendungsfall erwähnenswert, nämlich eine längere Höchstbelastung beim Anfahren oder im Stillstand. Hier kann ein Kettenzahnrad durch seitliches Ausknicken kollabieren.

Dem Trend, noch schmälere und leichtere Kettenzahnräder bereit zu stellen, kann man mit der bisherigen Technik nicht mehr folgen, weshalb gemäß der vorliegenden Erfindung vorgeschlagen wird, Elastizitäten den einzelnen Zähnen zugeordnet zu integrieren, mit Hilfe derer die funktionale Federsteifigkeit zwischen zwei nebeneinander liegenden Zähnen in der Weise beeinflusst wird, dass sich die Teilung dieser Zähne lastabhängig an die vorgegebene Kettenteilung anpassen kann. Es hat sich als zweckmäßig erwiesen, diese Elastizitäten mit Durchbrüchen zu erreichen, die angeordnet werden unter den Zähnen zwischen einem Verzahnungsbereich außerhalb der Durchbrüche und einem Bereich radial innerhalb der Durchbrüche mit dem Anschluss an ein Antriebsteil. Die Kontur der Durchbrüche lässt unter jedem betroffenen einzelnen Zahn ein System aus Stegen entstehen, welches für diesen betroffenen einzelnen Zahn bei Krafteinleitung durch eine Rolle der Kette in einer Antriebsdrehrichtung eine Biegung zulässt, bis eine weitere Rolle der Kette an einer Lastflanke des in der Antriebsdrehrichtung nachfolgenden Zahnes anliegt und Kraft übertragen kann. Ist die Kraft groß genug, so kann eine Biegung dieses nachfolgenden Zahnes zur Beteiligung eines weiteren nachfolgenden Zahnes an der Kraftübertragung führen.

Die Durchbrüche weisen eine längliche Form auf, die ausgehend von dem Bereich radial innerhalb der Durchbrüche in der Antriebsdrehrichtung vorlaufend nach außen zum Verzahnungsbereich außerhalb der Durchbrüche verläuft. Es entsteht so ein System aus Stegen, die mit dem Zahn in Wirkverbindung stehen und auf einer ihrer Seiten von der Kontur der Durchbrüche gebildet werden. Ausgehend von der Überlegung, dass nur ein Zahn einen derart geformten Durchbruch aufweist, lassen sich zwei Stege definieren, nämlich ein erster Steg zwischen der Kontur und der der Lastflanke des Zahnes zugewandten Hälfte der Zahnlücke und ein zweiter Steg zwischen der Kontur und einer zweiten Hälfte der Zahnlücke, die der Nicht-Lastflanke zugewandt ist, wobei die Kraft übertragende Lastflanke am Zahn der Nicht-Lastflanke gegenüber liegt. Bei Belastung erfährt der Zahn eine Auslenkung, die im ersten Steg eine Zugbelastung und im zweiten Steg eine Druckbelastung hervorruft. Denkt man sich in Antriebsdrehrichtung vorlaufend einen zweiten Durchbruch, der einem zweiten Zahn zugeordnet ist, so lässt sich ein dritter Steg zwischen beiden Durchbrüchen erkennen, der bei Belastung des erstgenannten Zahnes unter Biegebelastung steht, hervorgerufen durch den unter Druckbelastung stehenden zweiten Steg.

Die Kontur eines Durchbruches kann hinsichtlich der Ausbildung seiner Stege gegenüber den restlichen Durchbrüchen verändert sein, wenn der darüberliegende Zahn zu den restlichen Zähnen konstruktive Unterschiede, beispielsweise eine reduzierte Blechstärke aufweist. Hierdurch wird die Lastflanke geschwächt und verschleißt vorzeitig, wenn die Elastizität durch eine modifizierte Kontur nicht entsprechend angepasst wird.

Zweckmäßigerweise ist unter jedem Zahn der Verzahnung ein Durchbruch angeordnet, so dass ungeachtet der Position des Kettenzahnrades zu einem Antriebskettenrad an den Pedalen jeder einzelne Zahn durch seine Elastizität an der Verschleißminderung an den Lastflanken beteiligt ist. Hierdurch eröffnen sich die erfindungsgemäßen Vorteile, die es möglich machen,
- den Verschleiß an den Lastflanken zu reduzieren;
- zu verhindern, dass die Zähne ungleich großen Kräften ausgesetzt sind durch Teilungsungenauigkeiten im Neuzustand;
- die Belastungen an den Rollen der Kette zu reduzieren;
- Lastspitzen mit der Gefahr der Rissbildung abzufedern, die entstehen, wenn geschaltet wird;
- Maximalspannungen am Zahn, hervorgerufen durch Biege-Wechselbelastung herabzusetzen;
- die Krafteinleitung auf mehrere hintereinander liegende Zähne zu erstrecken und die Knickneigung des Kettenzahnrades und/oder des Antriebsteiles bei statischer Belastung zu verringern;
- Materialien einzusetzen, die eine höhere Verschleißneigung und geringere Festigkeitsparameter aufweisen;
- weiter Gewichtseinsparungen zu realisieren.

Die vorliegende Erfindung hat es sich somit zur Aufgabe gemacht, für ein Kettengetriebe, insbesondere für ein Fahrrad, Kettenzahnräder zu schaffen, die gegenüber dem Stand der Technik Gewichtseinsparungen ermöglichen, ein verbessertes Verschleißverhalten aufweisen und/oder höhere Kräfte übertragen sowie ferner die Möglichkeit bieten, von Stahl verschiedene Werkstoffe für deren Herstellung einzusetzen.

Die Lösung der Aufgabe ist im kennzeichnenden Teil des Hauptanspruches beschrieben. Ausgestaltungen sind den Unteransprüchen zu entnehmen.

Anhand mehrerer Zeichnungen ist ein Kettenzahnrad erläutert. Es zeigen
- Fig. 1: ein Kettenzahnrad mit einem Durchbruch unter einem Zahn mit der Bildung eines ersten Steges und eines zweiten Steges sowie mit einer Auslenkung als Teilansicht;
- Fig. 2: ein erfindungsgemäßes Kettenzahnrad mit zwei Durchbrüchen an zwei aufeinander folgenden Zähnen und einem dritten Steg sowie mit einer Auslenkung als Teilansicht;
- Fig. 3: ein erfindungsgemäßes Kettenzahnrad mit einer Rolle und Durchbrüchen unter jedem Zahn sowie mit den drei Stegen als Teilansicht;
- Fig. 4: ein Kettenzahnrad mit Rollen einer angedeuteten Kette im Eingriff als Teilansicht.

Wird mit 1 eine Kette bezeichnet, so greift diese in Zähne 4 einer Verzahnung 3 auf einem Kettenzahnrad 2 ein und überträgt im Fahrbetrieb eines Fahrrades ein Drehmoment auf ein Antriebsteil 12, das mit dem Hinterrad des Fahrrades verbunden ist. Der Zahn 4 weist eine Lastflanke 5 und in einer Antriebsdrehrichtung 13 bezogen auf eine Mittellinie 21 eine gegenüberliegend angeordnete Einlaufflanke 6 auf, wobei jeweils eine Rolle 7 der Kette 1 in eine Zahnlücke zwischen zwei Zähnen 4 einläuft und über die Lastflanke 5 eine Kraft 17 auf jeden Zahn 4 des Kettenzahnrades 2 überträgt.

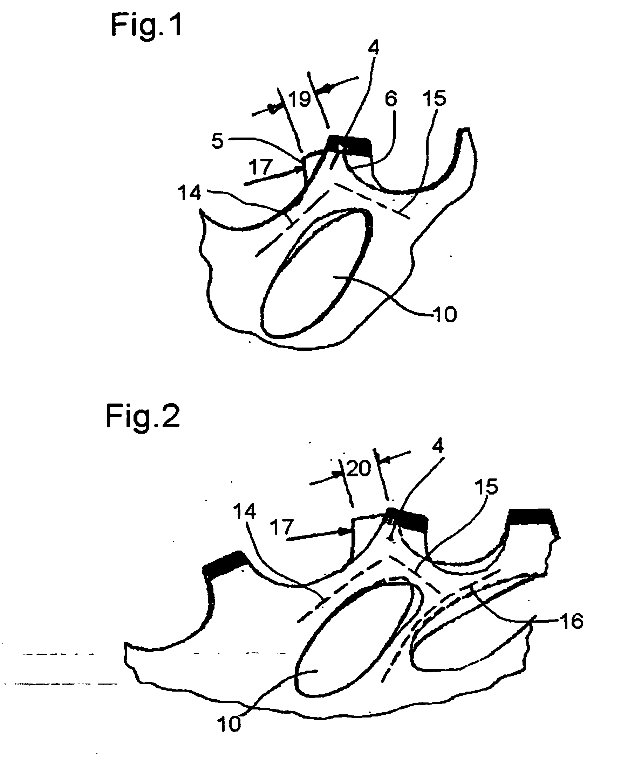

Das Kettenzahnrad 2 weist gemäß Fig. 1 unterhalb eines Zahnes 4 einen Durchbruch 10 auf, der länglich ausgebildet ist und eine Kontur 11 aufweist. Zwischen der Kontur 11 und der Lastflanke 5 zugewandten Hälfte einer Zahnlücke wird ein erster Steg 14 ausgeformt. Zwischen der Kontur 11 und einer zweiten Hälfte der Zahnlücke, die der Nicht-Lastflanke 6 zugewandt ist, wird ein zweiter Steg 15 gebildet, der wie der erste Steg 14 für eine elastische Anbindung des Zahnes 4 an dem Kettenzahnrad 2 sorgt. Die Lastflanke 5 liegt der Nicht-Lastflanke 6 bezogen auf eine Mittellinie des Zahnes 4 gegenüber. Es ist ersichtlich, dass der Zahnkopf infolge der Einwirkung der Kraft 17 eine Auslenkung 19 erfährt.

Gemäß Fig.2 folgt in der Antriebsdrehrichtung 13 ein weiterer Durchbruch 10 auf den vorgenannten ersten Durchbruch 10, wodurch ein dritter Steg 16 entstanden ist, der die Elastizität für den vorgenannten Zahn 4 noch verstärkt. Der Zahnkopf erfährt infolge der Einwirkung der Kraft 17 eine Auslenkung 20, die größer ist, als die Auslenkung 19, da der dritte Steg 16 durch seine große Länge zwischen den Durchbrüchen 10 eine zusätzliche Biegeelastizität aufweist.

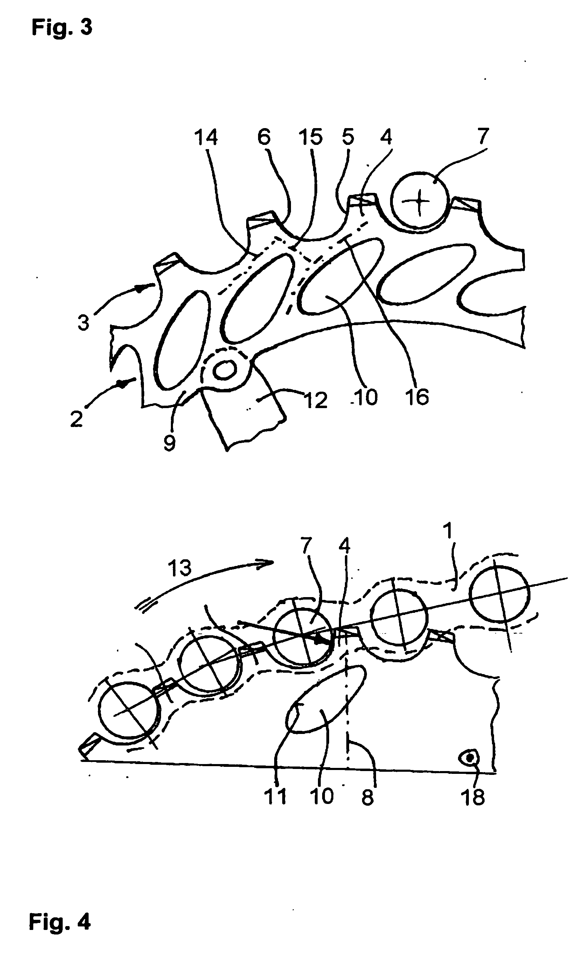

Aus der Fig. 3 geht die Anordnung der Durchbrüche 10 hervor, wie sie über den ganzen Umfang des Kettenzahnrades 2 angeordnet sind. Hier ist auch gezeigt, wie der Verzahnungsbereich 8 radial außerhalb der Durchbrüche 10 und der Bereich 9 radial innerhalb der Durchbrüche 10 angeordnet sind. Eine Rolle 7 liegt an der Lastflanke 5 eines Zahnes 4 an. Der Antriebsteil 12 übernimmt das Drehmoment im Bereich 9.

In Fig. 4 ist eine Kette 1 angedeutet, die mit drei Rollen 7 an den Lastflanken 5 der Zähne 4 anliegt und mit zwei Rollen 7 bereits außer Eingriff mit dem Kettenzahnrad 2 gekommen ist. Jedes der Kettenzahnräder 2 weist eine Blechstärke 18 auf, die eine besondere Rolle bei Kettenzahnrädern 2 spielt, die durch Anprägungen an den Zähnen 4 eine reduzierte Blechstärke 18 aufweisen, was meist im Zusammenhang mit Steighilfen für die Kette 1 beim Schalten vom kleineren auf das größere Kettenzahnrad 2 steht.

Der Vorteil dieser Erfindung liegt speziell in einer Biegeelastizität eines jeden Zahnes 4 in Antriebsdrehrichtung zur Vermeidung schädlicher Lastspitzen.

### Bezugszeichenliste

- 1.: Kette
- 2.: Kettenzahnrad
- 3.: Verzahnung
- 4.: Zahn
- 5.: Lastflanke
- 6.: Nicht-Lastflanke
- 7.: Rolle
- 8.: Verzahnungsbereich
- 9.: Bereich
- 10.: Durchbruch
- 11.: Kontur
- 12.: Antriebsteil
- 13.: Antriebsdrehrichtung
- 14.: erster Steg
- 15.: zweiter Steg
- 16.: dritter Steg
- 17.: Kraft
- 18.: Blechstärke
- 19.: Auslenkung
- 20.: Auslenkung
- 21.: Mittellinie

## Patentansprüche

1. Kettenzahnrad (2) zur Übertragung einer Kettenumfangskraft, kurz Kraft bezeichnet, von einer Kette (1) auf ein Antriebsteil (12) oder umgekehrt, wobei die Kette (1) in Zähne (4) einer außen am Kettenzahnrad (2) angeordneten Verzahnung (3) eingreift und das Kettenzahnrad (2) mit einem Antriebsteil (12) zur Übertragung eines Drehmomentes drehfest verbunden ist und wobei das Kettenzahnrad (2) Durchbrüche (10) innerhalb der Verzahnung (3) aufweist,
wobei einem Zahn (4) des Kettenzahnrades (2) ein Durchbruch (10) zugeordnet ist, der durch eine radial verlaufende Mittellinie (8) durch den Zahn (4) unsymmetrisch geteilt wird und nahe an eine Lastflanke (5) des Zahnes (4) heranreicht und so einen ersten Steg (14) zwischen dieser und der Kontur (11) des Durchbruches (10) bildet und der ebenfalls nahe an eine Nicht-Lastflanke (6) des Zahnes (4) heranreicht und dort einen zweiten Steg (15) zwischen dieser und der Kontur (11) des Durchbruches (10) bildet,
**dadurch gekennzeichnet,**
**dass** der erste Steg (14) zwischen der Lastflanke (5) des Zahnes (4) und der Kontur (11) des Durchbruches (10) im Falle einer Belastung der Lastflanke (5) des Zahnes (4) durch eine Rolle (7) der Kette (1) als Zugelement beansprucht wird.
wobei der zweite Steg (15) zwischen der Nicht-Lastflanke (6) des Zahnes (4) und der Kontur (11) des Durchbruches (10) im Falle einer Belastung der Lastflanke (5) des Zahnes (4) durch eine Rolle (7) der Kette (1) als Druck-Biege-Element beansprucht wird,
wobei einer Mehrzahl aufeinander folgender Zähne (4) je ein Durchbruch (10) zugeordnet ist und der dem als Zugelement beanspruchten ersten Steg (14) bezogen auf den Zahn (4) in einer Antriebsdrehrichtung (13) folgende Durchbruch (10) einen dritten Steg (16) bildet, der durch Belastung vom zweiten Steg (15) als Biegeelement beansprucht wird.

2. Kettenzahnrad nach Anspruch 1,
**dadurch gekennzeichnet,**
**dass** der als Zugelement beanspruchte erste Steg (14) länger ist, als der als Druck-Biege-Element beanspruchte zweite Steg (15).

3. Kettenzahnrad nach einem der Ansprüche 1 bis 2,
**dadurch gekennzeichnet,**
**dass** der unter der höchsten von der Kette (1) ausgehenden Kraft (17) stehende erste Zahn (4) in Antriebsdrehrichtung (13) gebogen wird, wodurch sich eine Vergrößerung der Teilung zum in Antriebsdrehrichtung (13) nachfolgenden zweiten Zahn (4) ergibt und dieser zweite Zahn (4) nunmehr einen größeren Anteil der Kraft (17) überträgt.

4. Kettenzahnrad nach einem der Ansprüche 1 bis 3,
**dadurch gekennzeichnet,**
**dass** der zweite Zahn (4) ebenfalls in Antriebsdrehrichtung (13) gebogen wird, wodurch sich eine Vergrößerung der Teilung zum in Antriebsdrehrichtung (13) nachfolgenden dritten Zahn (4) ergibt und dieser dritte Zahn (4) nunmehr einen größeren Anteil der Kraft (17) überträgt.

5. Kettenzahnrad nach einem der Ansprüche 1 bis 4,
**dadurch gekennzeichnet,**
**dass** ein weiterer, in Antriebsdrehrichtung (13) folgender und noch nicht an der Übertragung der Kraft (17) beteiligter Zahn (4) infolge der Vergrößerung der Teilung durch die Biegung des in Antriebsdrehrichtung (13) vorauslaufenden Zahnes (4) nunmehr auch an der Übertragung der Kraft (17) beteiligt wird.

6. Kettenzahnrad nach einem der Ansprüche 1 bis 5,
**dadurch gekennzeichnet,**
**dass** die Kontur mindestens eines Durchbruches hinsichtlich der Elastizität seiner Stege (14, 15, 16) gegenüber den restlichen Durchbrüchen (10) verändert ist, wenn der darüberliegende Zahn (4) zu den restlichen Zähnen (4) konstruktive Unterschiede, beispielsweise eine reduzierte Blechstärke (18), aufweist.

## Claims

1. Sprocket wheel (2) for transmission of a chain circumferential force, referred to in short as a force, from a chain (1) to a drive input part (12) or vice versa, wherein the chain (1) engages in teeth (4) of a toothing (3) arranged on the outside of the sprocket wheel (2) and the sprocket wheel (2) is connected in a rotationally fixed manner to a drive input part (12) for transmission of a torque and wherein the sprocket wheel (2) has apertures (10) within the toothing (3), wherein a tooth (4) of the sprocket wheel (2) is assigned an aperture (10) which is asymmetrically divided by a radially extending centre line (8) through the tooth (4) and reaches close to a load flank (5) of the tooth (4) and thus forms a first web (14) between said load flank (5) and the contour (11) of the aperture (10) and which also reaches close to a non-load flank (6) of the tooth (4) and there forms a second web (15) between said non-load flank (6) and the contour (11) of the aperture (10),
**characterized in that** the first web (14) between the load flank (5) of the tooth (4) and the contour (11) of the aperture (10) is stressed as a tensile element in the event of a loading of the load flank (5) of the tooth (4) by a roller (7) of the chain (1),
wherein the second web (15) between the non-load flank (6) of the tooth (4) and the contour (11) of the aperture (10) is stressed as a pressure bending element in the event of a loading of the load flank (5) of the tooth (4) by a roller (7) of the chain (1),
wherein a plurality of consecutive teeth (4) is assigned in each case to an aperture (10) and the aperture (10) which follows the first web (14) stressed as a tensile element relative to the tooth (4) in a drive rotational direction (13) forms a third web (16) which is stressed as a bending element by loading of the second web (15).

2. Sprocket wheel according to Claim 1,
**characterized in that** the first web (14) stressed as a tensile element is longer than the second web (15) stressed as a pressure bending element.

3. Sprocket wheel according to one of Claims 1 to 2,
**characterized in that** the first tooth (4) which is subject to the highest force (17) coming from the chain (1) is bent in the drive rotational direction (13), as a result of which an enlargement of the division to the second tooth (4) following in the drive rotational direction (13) is produced and this second tooth (4) now transmits a higher ratio of the force (17).

4. Sprocket wheel according to one of Claims 1 to 3,
**characterized in that** the second tooth (4) is also bent in the drive rotational direction (13), as a result of which an enlargement of the division to the third tooth (4) following in the drive rotational direction (13) is produced and this third tooth (4) now transmits a higher ratio of the force (17).

5. Sprocket wheel according to one of Claims 1 to 4,
**characterized in that** a further tooth (4) which follows in the drive rotational direction (13) and is not yet involved in the transmission of the force (17) is now also involved in the transmission of the force (17) as a result of the enlargement of the division by the bending of the tooth (4) which runs ahead in the drive rotational direction (13).

6. Sprocket wheel according to one of Claims 1 to 5,
**characterized in that** the contour of at least one aperture is changed in terms of the elasticity of its webs (14, 15, 16) with respect to the remaining apertures (10) if the tooth (4) above it has structural differences to the remaining teeth (4), for example, a reduced sheet thickness (18).

## Revendications

1. Roue dentée à chaîne (2) pour le transfert d'une force périphérique de chaîne, abrégée par force, d'une chaîne (1) à une partie d'entraînement (12) ou inversement, la chaîne (1) venant en prise dans des dents (4) d'une denture (3) disposée à l'extérieur sur la roue dentée de chaîne (2) et la roue dentée de chaîne (2) étant connectée de manière solidaire en rotation à une partie d'entraînement (12) pour le transfert d'un couple, et la roue dentée de chaîne (2) présentant des orifices (10) à l'intérieur de la denture (3),
un orifice (10) étant associé à une dent (4) de la roue dentée de chaîne (2), lequel orifice est divisé de manière asymétrique par un axe médian (8) s'étendant radialement à travers la dent (4) et s'approche d'un flanc de charge (5) de la dent (4), et forme ainsi une première membrure (14) entre celui-ci et le contour (11) de l'orifice (10), et lequel orifice se rapproche également d'un flanc sans charge (6) de la dent (4) et y forme une deuxième membrure (15) entre celui-ci et le contour (11) de l'orifice (10),
**caractérisée en ce que**
la première membrure (14) entre le flanc de charge (5) de la dent (4) et le contour (11) de l'orifice (10), dans le cas d'une sollicitation du flanc de charge (5) de la dent (4) par un rouleau (7) de la chaîne (1), est sollicitée en tant qu'élément de traction,
la deuxième membrure (15) entre le flanc sans charge (6) de la dent (4) et le contour (11) de l'orifice (10), dans le cas d'une sollicitation du flanc de charge (5) de la dent (4) par un rouleau (7) de la chaîne (1), étant sollicitée en tant qu'élément de flexion-compression,
une pluralité de dents successives (4) étant associée à chaque fois à un orifice (10),
et l'orifice (10) suivant la première membrure (14) sollicitée en tant qu'élément de traction par rapport à la dent (4) dans une direction de rotation d'entraînement (13) formant une troisième membrure (16) qui est sollicitée en tant qu'élément de flexion par sollicitation par la deuxième membrure (15).

2. Roue dentée à chaîne selon la revendication 1,
**caractérisée en ce que**
la première membrure (14) sollicitée en tant qu'élément de traction est plus longue que la deuxième membrure (15) sollicitée en tant qu'élément de flexion-compression.

3. Roue dentée à chaîne selon l'une quelconque des revendications 1 et 2,
**caractérisée en ce que**
la première dent (4) soumise à la force (17) maximale provenant de la chaîne (1) est cintrée dans la direction de rotation d'entraînement (13), de sorte que l'on obtienne un agrandissement du pas par rapport à la deuxième dent (4) suivante dans la direction de rotation d'entraînement (13) et que cette deuxième dent (4) transmette alors une plus grande proportion de la force (17).

4. Roue dentée à chaîne selon l'une quelconque des revendications 1 à 3,
**caractérisée en ce que**
la deuxième dent (4) est également cintrée dans la direction de rotation d'entraînement (13), de sorte que l'on obtienne un agrandissement du pas par rapport à la troisième dent (4) suivante dans la direction de rotation d'entraînement (13) et que cette troisième dent (4) transmette alors une plus grande proportion de la force (17).

5. Roue dentée à chaîne selon l'une quelconque des revendications 1 à 4,
**caractérisée en ce**
**qu'**une autre dent (4) suivante dans la direction de rotation d'entraînement (13) et ne participant pas encore au transfert de la force (17), du fait de l'agrandissement du pas par la courbure de la dent (4) précédente dans la direction de rotation d'entraînement (13), participe à présent aussi au transfert de la force (17).

6. Roue dentée à chaîne selon l'une quelconque des revendications 1 à 5,
**caractérisée en ce que**
le contour d'au moins un orifice en termes d'élasticité de ses membrures (14, 15, 16) est modifié par rapport au reste des orifices (10), lorsque la dent supérieure (4) par rapport aux reste des dents (4) présente des différences constructives, par exemple une épaisseur de tôle réduite (18).
